# EUROPÄISCHE PATENTSCHRIFT

(11) **EP 1 954 543 B1**
(45) Veröffentlichungstag und Bekanntmachung des Hinweises auf die Patenterteilung: **20.07.2011**
(21) Anmeldenummer: 06793617.9
(22) Anmeldetag: 19.09.2006
(51) Int. Cl.: B60W 30/18, B60T 13/58

(54) **REKUPERATION VON ENERGIE BEI HYBRIDFAHRZEUGEN MIT EINER HERKÖMMLICHEN HYDRAULISCHEN ODER PNEUMATISCHEN BREMSANLAGE**
RECOVERY OF ENERGY IN HYBRID VEHICLES COMPRISING A CONVENTIONAL HYDRAULIC OR PNEUMATIC BRAKE SYSTEM
RECUPERATION D'ENERGIE SUR DES VEHICULES HYBRIDES EQUIPES D'UN SYSTEME DE FREINAGE HYDRAULIQUE OU PNEUMATIQUE CLASSIQUE

(30) Priorität: 16.11.2005 DE 102005054614
(43) Veröffentlichungstag der Anmeldung: 13.08.2008
(73) Patentinhaber: ROBERT BOSCH GMBH, 70442 Stuttgart (DE)
(72) Erfinder: AHNER, Peter, 71032 Boeblingen (DE); BEULICH, Klaus, 71263 Weil der Stadt (DE); WALDENMEIER, Steffen, 75249 Kieselbronn (DE)
(86) Internationale Anmeldenummer: PCT/EP2006/066480
(87) Internationale Veröffentlichungsnummer: WO 2007/057246

(56) Entgegenhaltungen:
- EP-A- 1 547 891
- EP-A1- 0 751 541
- US-A- 5 842 534
- US-B1- 6 231 135

## Beschreibung

Die Erfindung betrifft ein Verfahren zum Rückgewinnen von Energie bei einem Bremsvorgang eines Hybrid-Fahrzeugs gemäß dem Oberbegriff des Patentanspruchs 1, sowie eine entsprechende Vorrichtung gemäß dem Oberbegriff des Patentanspruchs 5.

Hybridfahrzeuge umfassen neben dem Verbrennungsmotor üblicherweise eine elektrische Maschine, die in Abhängigkeit von der Fahrsituation entweder im Motor- oder im Generatorbetrieb betrieben wird. Im Motorbetrieb erzeugt die elektrische Maschine ein zusätzliches Antriebsmoment, das den Verbrennungsmotor z.B. in einer Beschleunigungsphase unterstützt. Im Generatorbetrieb wird dagegen die bei der Verzögerung des Fahrzeugs frei werdende kinetische Energie in elektrische Energie gewandelt (Rekuperation). Die so gewonnene elektrische Energie wird in einem Energiespeicher, wie z.B. einer Batterie oder einem Super-Cap, gespeichert und kann in anderen Fahrsituationen z. B. zum Antrieb des Fahrzeugs oder zur Versorgung elektrischer Verbraucher genutzt werden. Der Wirkungsgrad des Fahrzeugs kann dadurch erheblich gesteigert werden.

Aus der US 6 231 135 B1 ist ein hybrides Bremssystem für ein Fahrzeug bekannt, welches ein elektrisches und ein mechanisches Bremssystem umfasst. Entweder wird durch Betrieb eines elektrischen Generators zur Energieerzeugung oder mittels einer mechanischen Bremse, die auf die Räder des Fahrzeugs wirkt, gebremst. Ein Fahrzeugbremsensteuergerät steuert zunächst das elektrische Bremssystem an, und schiebt den Einsatz des mechanischen Bremssystems auf, bis zu einem Anstieg des angeforderten Bremsmoments.

Aus der EP 1 547 891 A1 ist eine Vorrichtung zum Abbremsen eines elektrischen Fahrzeugs, umfassend wenigstens einen reversiblen, elektrischen Motor und eine mechanische Bremsvorrichtung, einen Positionssensor des Gaspedals, einen Positionssensor des Bremspedals und einen Rechner, der es ermöglicht, das durch den elektrischen Motor aufgebrachte Widerstandsmoment in Abhängigkeit vom Durchtreten des Bremspedals und vom Durchtreten des Gaspedals zu regeln, dadurch gekennzeichnet, dass der Rechner den elektrischen Motor derartig regelt, dass das sich aus der Kombination aus durch die mechanische Bremse und den elektrischen Motor aufgebrachten Momente ergebende Moment im Wesentlichen linear und im Wesentlichen proportional zum Durchtreten des Bremspedals ist.

Aus der EP 0751 541 A1 ist zur Betätigung einer Bremse ein Pedal vorgesehen mit berührungslosem Pedalschalter mit einem lagefest angeordneten Näherungsschalter und mit einem am Pedal im wesentlichen parallel zu dessen Betätigungsrichtung angeordneten, sich mit dem Pedal in axialer Richtung mitbewegenden ferromagnetischen Stift, dessen schalterseitiges Ende in der Ruhestellung des Pedals in den aktiven Schaltbereich des Näherungsschalters hineinreicht und durch Betätigen des Pedals aus dem Schaltbereich herausbewegbar ist, wobei der Stift im Pedal zum Zweck der Selbstjustage axial verschiebbar gelagert ist.

Die Menge der vom Generator erzeugbaren elektrischen Energie ist abhängig vom Ladezustand bzw. der Aufnahmefähigkeit des Energiespeichers. Bei einem voll aufgeladenen Energiespeicher kann nur sehr wenig bzw. gar keine elektrische Energie in das Bordnetz gespeist werden, da der Energiespeicher andernfalls überlastet oder spannungsempfindliche Verbraucher beschädigt werden könnten. Die vom Generator abgegebene Leistung wird von einem Regler entsprechend eingestellt.

Der Generator erzeugt im Rekuperationsbetrieb ein leistungsabhängiges Brems- bzw. Schleppmoment. Dabei gilt grundsätzlich, dass das Schleppmoment mit

zunehmender Erzeugung elektrischer Leistung steigt. Wegen der Abhängigkeit vom Ladezustand des elektrischen Energiespeichers kann das Schleppmoment stark variieren. Bei einem vom Fahrer initiierten Bremsvorgang (durch Betätigung der Betriebsbremse), bei dem die elektrische Maschine im Rekuperationsbetrieb zugeschaltet ist, variiert somit auch das Bremsverhalten des Fahrzeugs entsprechend. Dies gefährdet die Fahrsicherheit.

Hybrid-Fahrzeuge mit einer herkömmlichen hydraulischen oder pneumatischen Bremsanlage (bei der ein mechanischer Durchgriff zwischen dem Bremspedal und den einzelnen Radbremsen besteht) sind daher so ausgelegt, dass entweder nur beim Ausrollen des Fahrzeugs (nicht beim Bremsen) Energie zurück gewonnen oder beim Bremsen nur ein sehr geringer Betrag an Energie zurück gewonnen wird, um den Einfluss des Generators gering zu halten. Dies hat jedoch den wesentlichen Nachteil, dass die vom Generator maximal erzeugbare elektrische Leistung - vorausgesetzt der Energiespeicher ist aufnahmefähig - nicht voll ausgenutzt und somit der Wirkungsgrad des Fahrzeugs nur wenig verbessert werden kann.

Eine maximale Rückgewinnung von Bremsenergie ist i. d. R. nur bei HybridFahrzeugen mit einem elektrohydraulischen Bremssystem (EHB) möglich, da die schwankende Bremswirkung des Generators bei solchen Systemen kompensiert werden kann (üblicherweise durch eine Variation der Bremskennlinie). Der Fahrer spürt in diesem Fall bei gleicher Betätigung des Bremspedals immer die gleiche Bremswirkung. Diese Kompensation ist nur bei elektrohydraulischen Bremssystemen, nicht jedoch bei rein hydraulischen bzw. rein pneumatischen Bremssystemen möglich.

Es ist daher die Aufgabe der vorliegenden Erfindung, ein Verfahren bzw. eine Vorrichtung zum Rückgewinnen von Energie bei Hybridfahrzeugen zu schaffen, das bzw. die es ermöglicht, ein Höchstmaß an Energie zurück zu gewinnen, ohne die Bremswirkung der Betriebsbremse zu stark zu beeinträchtigen.

Gelöst wird diese Aufgabe gemäß der Erfindung durch die im Patentanspruch 1 sowie im Patentanspruch 5 angegebenen Merkmale. Weitere Ausgestattungen der Erfindung sind Gegenstand von Unteransprüchen.

Ein wesentlicher Aspekt der Erfindung besteht darin, elektrische Energie vor allem in einem Anfangsbereich des Bremspedalwegs zurück zu gewinnen und bei einer über den Anfangsbereich hinausgehenden Betätigung des Fuß-Bremspedals die Generatorleistung zu reduzieren. Der Anfangsbereich ist vorzugsweise ein Bereich, in dem die Betriebsbremse noch nicht anspricht bzw. nur eine sehr geringe Bremswirkung entfaltet und ist vorzugsweise kleiner als 20mm Pedalweg. Durch die Beschränkung der Rekuperation auf diesen Anfangsbereich wird erreicht, dass der Generator das Bremsverhalten des Fahrzeugs bei einer stärkeren Bremsbetätigung nicht oder nur geringfügig beeinträchtigt. Wenn der Fahrer das Bremspedal nur leicht antippt, kann dagegen ein maximaler Betrag an elektrischer Leistung zurück gewonnen werden. In diesem Fall ist die Bremswirkung des Generators zwar auch abhängig vom Ladezustand des elektrischen Energiespeichers, der Fahrer gibt aber keinen bestimmten Bremswunsch vor, der exakt umgesetzt werden muss. Ein Vorteil dieses Systems besteht also darin, dass der Fahrer in einer unkritischen Fahrsituation, wenn das Fahrzeug z.B. vor einer Ampel ausrollt, durch eigene Initiative maximal Energie zurück gewinnen kann, indem er das Bremspedal leicht antippt.

Der Anfangsbereich der Pedalbetätigung, in dem die Rekuperation vor allem aktiv ist, ist vorzugsweise durch das Spiel der Bremse definiert und reicht vorzugsweise bis zu einem Druckpunkt, ab dem die Betriebsbremse anspricht. Dieser Druckpunkt liegt bei den meisten herkömmlichen Bremsanlagen bei ca. 6 mm bis 10 mm Pedalweg. Der Anfangsbereich kann aber auch unabhängig vom Druckpunkt auf einen beliebigen anderen Wert festgelegt werden, der vorzugsweise kleiner ist als 20 mm und insbesondere etwa 10 mm beträgt.

Die Höhe der zurück gewonnenen Energie hängt vorzugsweise davon ab, wie stark der Fahrer das Bremspedal antippt - immer vorausgesetzt der Energiespeicher ist aufnahmefähig. D.h., die Generatorleistung ist vorzugsweise eine Funktion des Bremspedalwegs bzw. der Pedalkraft. Gemäß einer bevorzugten Ausführungsform der Erfindung ist das Rekuperationssystem derart ausgelegt, dass der Generator bei einer Betätigung des Fuß-Bremspedals im Anfangsbereich mit zunehmendem Pedalweg eine höhere Generatorleistung erzeugt. Dadurch wird ermöglicht, dass der Fahrer nach Wunsch mehr oder weniger Energie zurückgewinnen kann. Die Höhe der zurück gewonnenen Energie kann dem Fahrer z. B. auf einem Display angezeigt werden.

Zur Auflösung des Anfangsbereichs ist vorzugsweise ein Pedalwertgeber vorgesehen, dessen Signal von einer Elektronik, insbesondere einem Steuergerät, ausgewertet wird. Die Elektronik steuert den Generator bzw. einen Pulswechselrichter derart an, dass - sofern möglich - elektrische Energie in das Bordnetz gespeist wird, wenn der Fahrer das Fuß-Bremspedal im Anfangsbereich betätigt.

Der Pedalwertgeber kann beispielsweise einen stationär angeordneten Sensor (z. B. Abstandssensor) und einen am Bremspedal angeordneten Geber, wie z.B. eine Referenzplatte, umfassen. Der Pedalwertgeber kann beispielsweise als induktiver oder kapazitiver Abstandssensor realisiert sein. Vorzugsweise wird ein Magnetfeldsensor, wie z. B. ein Hall-, AMR- oder GMR-Sensor verwendet. Andere bekannte Sensortypen sind ebenfalls einsetzbar. Der Pedalwertgeber könnte wahlweise auch an einer Druckstange zwischen Bremspedal und Bremszylinder oder im Bremskraftverstärker angeordnet sein. Wesentlich ist, dass zumindest der Anfangsbereich der Pedalbetätigung aufgelöst werden kann.

Die Erfindung wird nachstehend anhand der beigefügten Zeichnungen beispielhaft näher erläutert. Es zeigen:
Fig. 1 eine schematische Darstellung eines Rekuperationssystems gemäß einer Ausführungsform der Erfindung;
Fig. 2 ein Diagramm zur Darstellung der Generatorleistung in Abhängigkeit vom Pedalweg; und
Fig. 3 eine schematische Ansicht eines Bremspedals mit Pedalwertgeber.

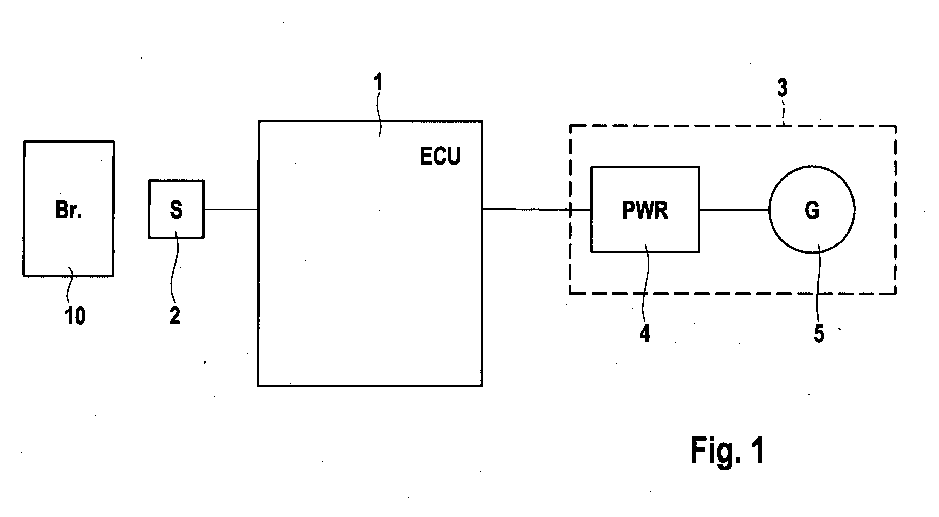

Fig. 1 zeigt eine Blockdarstellung eines Rekuperationssystems zum Rückgewinnen elektrischer Energie bei einem Bremsvorgang eines Hybridfahrzeugs, das neben dem Verbrennungsmotor auch eine elektrische Maschine 3 umfasst. Die elektrische Maschine 3 wird im Rekuperationsbetrieb als Generator betrieben und erzeugt dabei elektrische Energie, die in einem Energiespeicher (nicht gezeigt) des Bordnetzes gespeichert wird.

Das Rekuperationssystem umfasst im Wesentlichen einen dem Fuß-Bremspedal 10 zugeordneten Pedalwertgeber 2, der an einem Steuergerät 1 angeschlossen ist, das das Sensorsignal auswertet und die elektrische Maschine 3 entsprechend ansteuert. Die elektrische Maschine 3 umfasst die eigentliche Maschine 5, sowie einen Pulswechselrichter 4, mittels dessen die Betriebsart (Generatorbetrieb bzw. Motorbetrieb) die Leistung der Maschine 5 eingestellt werden kann.

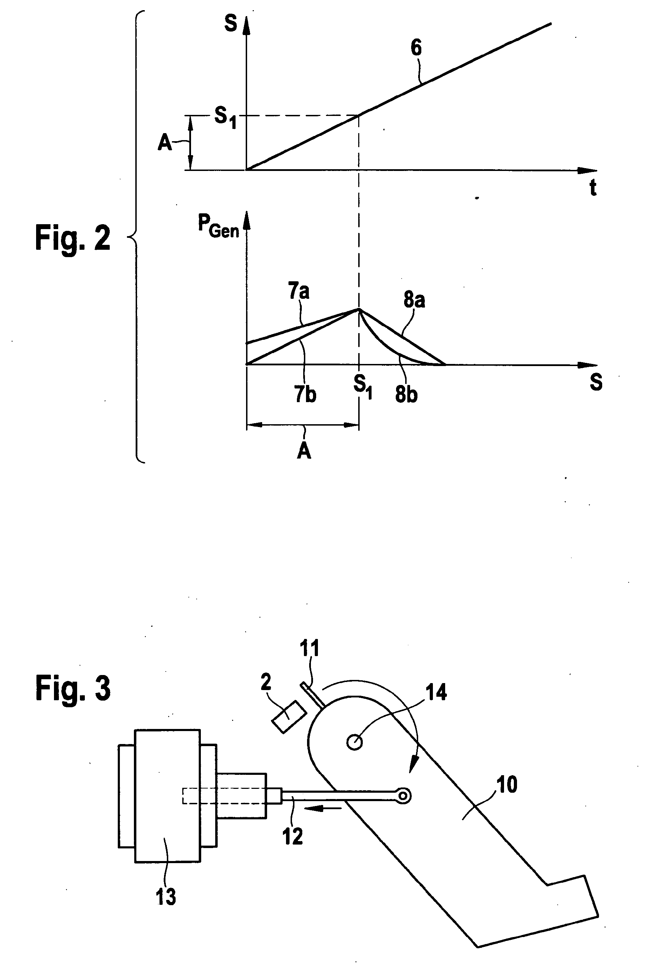

Das Rekuperationssystem ist hier derart ausgelegt, dass der Generator 5 vor allem in einem Anfangsbereich A (siehe Fig. 2 unten) des Pedalwegs s elektrische Energie erzeugt wird. Bei einer darüber hinaus gehenden Betätigung des Bremspedals 10 wird die elektrische Leistung dagegen reduziert. Der Anfangsbereich A kann z. B. nur wenige Millimeter, z.B. 6-10 mm, groß sein. Der Anfangsbereich A ist vorzugsweise durch das Spiel der Bremse definiert und reicht bis zu einem Druckpunkt s1, ab dem die Betriebsbremse anspricht.

Fig. 2 zeigt im oberen Diagramm den Verlauf 6 eines beispielhaften Bremsvorgangs, bei dem das Fuß-Bremspedal 10 ausgehend von der Null-Stellung zunehmend durchgedrückt wird und der Pedalweg s somit rampenartig zunimmt. Im unteren Diagramm ist die zugehörige Generatorleistung P_{Gen} in Abhängigkeit vom Pedalweg s dargestellt. Im Falle der Kurve 7b nimmt die Generatorleistung P_{Gen} im Anfangsbereich A, ausgehend von Null stetig zu - eine entsprechende Aufnahmefähigkeit des Energiespeichers vorausgesetzt. Wenn das Pedal 10 über den Grenzwert s1 durchgedrückt wird, wird die Generatorleistung reduziert. Die Reduktion kann linear (Kennlinie 8a), exponentiell (Kennlinie 8b) oder in beliebiger anderer Weise erfolgen. Wahlweise, allerdings nicht im Rahmen der vorliegenden Erfindung, könnte der Generatorbetrieb auch vollständig deaktiviert werden (sprungartige Reduktion). Dadurch wird erreicht, dass der Fahrer die Möglichkeit hat, das Bremspedal 10 leicht anzutippen, um aktiv elektrische Energie zurück zu gewinnen. Das Bremsverhalten des Fahrzeugs wird dagegen bei einer stärkeren Betätigung des Bremspedals nicht oder nur geringfügig beeinträchtigt.

Im Falle der Kennlinie 7a wird bereits beim Ausrollen des Fahrzeugs (ohne Betätigung des Fuß-Bremspedals 10) elektrische Energie zurück gewonnen. Der Fahrer kann durch leichtes Antippen des Bremspedals die elektrische Leistung weiter erhöhen.

Fig. 3 zeigt eine schematische Seitenansicht eines Fuß-Bremspedals 10 nach einer Betätigung um wenige Millimeter aus der Nulllage. Die Anordnung zeigt das

Bremspedal 10, das über eine Druckstange 12 auf den Bremskraftverstärker 13 wirkt. Das Pedal 10 schwenkt bei einer Betätigung um die Achse 14. Die Anordnung umfasst ferner einen Pedalwertgeber 2, 11, der einen Abstandssensor 2 und eine am oberen Ende des Pedals 10 angeordnete Referenzplatte 11 umfasst. Der Pedalwertgeber 2,11 misst den Abstand der Referenzplatte 11 zum stationär montierten Sensor 2 und ist derart ausgelegt, dass wenigstens der Anfangsbereich A einer Pedalbetätigung aufgelöst werden kann.

## Patentansprüche

1. Verfahren zum Rückgewinnen von Energie bei einem Hybrid-Fahrzeug, das neben einem Verbrennungsmotor auch eine elektrische Maschine (3), sowie eine hydraulische oder pneumatische Bremsanlage umfasst, die mittels eines Fuß-Bremspedals (10) betätigt wird, wobei wenigstens der Anfangsbereich (A) einer Pedalbetätigung mit Hilfe eines Sensors (2) erfasst und die elektrische Maschine (3) im Generatorbetrieb betrieben wird, wenn der Fahrer das Fuß-Bremspedal (10) im Anfangsbereich (A) betätigt, **dadurch gekennzeichnet, dass** bei einer über den Anfangsbereich (A) hinaus gehenden Betätigung des Fuß-Bremspedals (10) die Generatorleistung (P_{gen}) reduziert wird.

2. Verfahren nach Anspruch 1, **dadurch gekennzeichnet, dass** die Höhe der Generatorleistung (P_{gen}) eine Funktion des Bremspedalwegs (s) oder der Pedalkraft ist.

3. Verfahren nach Anspruch 2, **dadurch gekennzeichnet, dass** die elektrische Maschine (3) im Anfangsbereich (A) derart betrieben wird, dass sie mit zunehmendem Bremspedalweg (s) eine höhere Generatorleistung (P_{gen}) erzeugt.

4. Verfahren nach einem der vorhergehenden Ansprüche, **dadurch gekennzeichnet, dass** der Anfangsbereich (A) einem Pedalweg von weniger als 10mm, insbesondere etwa 6 bis 8mm, entspricht.

5. Vorrichtung zur Rückgewinnung von Energie bei einem Hybrid-Fahrzeug, das neben einem Verbrennungsmotor auch eine elektrische Maschine (3), sowie eine hydraulische oder pneumatische Bremsanlage umfasst, die mittels eines Fuß-Bremspedals (10) betätigt wird, wobei ein Pedalwertgeber (2), der eine Betätigung des Fuß-Bremspedals (10) wenigstens in einem Anfangsbereich (A) erfasst, und eine Elektronik (1), die das Signal des Pedalwertgebers (2) auswertet und die elektrische Maschine (3) entsprechend im Generatorbetrieb ansteuert, wenn der Fahrer das Fuß-Bremspedal (10) im Anfangsbereich (A) betätigt vorgesehen sind, **dadurch gekennzeichnet, dass** die Elektronik (1) bei einer über den Anfangsbereich (A) hinaus gehenden Betätigung des Fuß-Bremspedals (10) die Generatorleistung (P_{gen}) reduziert.

6. Vorrichtung nach Anspruch 5, **dadurch gekennzeichnet, dass** die Höhe der Generatorleistung (P_{gen}) eine Funktion des Bremspedalwegs (s) oder der Pedalkraft ist.

7. Vorrichtung nach Anspruch 5 oder 6, **dadurch gekennzeichnet, dass** die elektrische Maschine (3) im Anfangsbereich (A) derart betrieben wird, dass sie mit zunehmendem Bremspedalweg (s) eine höhere Generatorleistung (P_{gen}) erzeugt.

8. Vorrichtung nach Anspruch 5, 6 oder 7, **dadurch gekennzeichnet, dass** der Pedalwertgeber (2) einen Abstandssensor (2) und eine am Pedal (10) montierte Referenzplatte (11) umfasst.

## Claims

1. Method for recovering energy in a hybrid vehicle, which comprises both an internal combustion engine and an electric machine (3), as well as a hydraulic or pneumatic brake system which is actuated by means of a foot-operated brake pedal (10), wherein at least the initial region (A) of activation of the pedal is detected using a sensor (2), the electric machine (3) is operated in the generator mode when the driver activates the foot-operated brake pedal (10) in the initial region (A), **characterized in that** in the case of activation of the foot-operated brake pedal (10) which goes beyond the initial region (A) the generator power (P_{gen}) is reduced.

2. Method according to Claim 1, **characterized in that** the level of the generator power (P_{gen}) is a function of the brake pedal travel (s) or of the pedal force.

3. Method according to Claim 2, **characterized in that** the electric machine (3) is operated in the initial region (A) in such a way that as the brake pedal travel (s) increases a higher generator power (P_{gen}) is generated.

4. Method according to one of the preceding claims, **characterized in that** the initial region (A) corresponds to a pedal travel of less than 10 mm, in particular approximately 6 to 8 mm.

5. Device for recovering energy in a hybrid vehicle which comprises both an internal combustion engine and an electric machine (3), as well as a hydraulic or pneumatic brake system which is activated by means of a foot-operated brake pedal (10), wherein a pedal value signal generator (2) which detects activation of the foot-operated brake pedal (10) at least in an initial region (A), and electronics (1) which evaluate the signal of the pedal value signal generator (2) and actuate the electric machine (3) correspondingly in the generator mode when the driver activates the foot-operated brake pedal (10) in the initial region (A), are provided, **characterized in that**, in the case of activation of the foot-operated brake pedal (10) which goes beyond the initial region (A) the electronics (1) reduce the generator power (Pgₑₙ).

6. Device according to Claim 5, **characterized in that** the level of the generator power (P_{gen}) is a function of the brake pedal travel (s) or of the pedal force.

7. Method according to Claim 5 or 6, **characterized in that** the electric machine (3) is operated in the initial region (A) in such a way that as the brake pedal travel (s) increases a higher generator power (P_{gen}) is generated.

8. Device according to Claim 5, 6 or 7, **characterized in that** the pedal value signal generator (2) comprises a distance sensor (2) and a reference plate (11) which is mounted on the pedal (10).

## Revendications

1. Procédé de récupération d'énergie dans un véhicule hybride qui comporte, outre un moteur à combustion, également un moteur électrique (3), ainsi qu'un système de freinage hydraulique ou pneumatique actionné à l' aide d'une pédale de frein (10), au moins la zone d'attaque (A) d'un actionnement de pédale étant détectée à l'aide d'un capteur (2) et le moteur électrique (3) étant entraîné dans le mode générateur lorsque le conducteur actionne la pédale de frein (10) dans la zone d' attaque (A), **caractérisé en ce qu'**en cas d'actionnement de la pédale de frein (10) à partir de la zone d'attaque (A), la puissance du générateur (P_{gen}) est réduite.

2. Procédé selon la revendication 1, **caractérisé en ce que** la puissance du générateur (P_{gen}) est fonction de la course de la pédale de frein (s) ou de la force d'actionnement de la pédale.

3. Procédé selon la revendication 2, **caractérisé en ce que** le moteur électrique (3) est entraîné de telle sorte dans la zone d'attaque (A) qu'il produit une augmentation de la puissance du générateur (P_{gen}) en même temps que la course de pédale de frein (s) progresse.

4. Procédé selon l'une quelconque des revendications précédentes, **caractérisé en ce que** la zone d'attaque (A) correspond à une course de pédale inférieure à 10 mm, notamment d'environ 6 à 8 mm.

5. Dispositif de récupération d'énergie dans un véhicule hybride comprenant, outre un moteur à combustion, également un moteur électrique (3), ainsi qu'un système de freinage hydraulique ou pneumatique actionné à l'aide d'une pédale de frein (10), un capteur de valeur de pédale (2) détectant un actionnement de la pédale de frein (10) au moins dans une zone d'attaque (A) et un système électronique (1) analysant le signal du capteur de valeur de pédale (2) et pilotant le moteur électrique (3) de façon correspondante dans le mode générateur étant prévus lorsque le conducteur actionne la pédale de frein (10) dans la zone d'attaque (A), **caractérisé en ce que** le système électronique (1) réduit la puissance du générateur (P_{gen}) en cas d'actionnement de la pédale de frein (10) à partir d'une zone d'attaque (A).

6. Dispositif selon la revendication 5, **caractérisé en ce que** la puissance du générateur (P_{gen}) est fonction de la course de la pédale de frein (s) ou de la force d'actionnement de la pédale.

7. Dispositif selon la revendication 5 ou 6, **caractérisé en ce que** le moteur électrique (3) est actionné dans la zone d'attaque (A) de telle sorte qu'il produit une augmentation de la puissance du générateur (P_{gen}) à mesure que la course de pédale de frein (s) progresse.

8. Dispositif selon la revendication 5, 6 ou 7, **caractérisé en ce que** le capteur de valeur de pédale (2) comprend un capteur d'écartement (2) et une plaque de référence (11) fixée au niveau de la pédale (10).
